(19) Europäisches Patentamt
European Patent Office
Office européen des brevets

(11) **EP 4 535 169 A1**

(12) **EUROPEAN PATENT APPLICATION**

(43) Date of publication:
**09.04.2025 Bulletin 2025/15**

(21) Application number: **23202230.1**

(22) Date of filing: **06.10.2023**

(51) International Patent Classification (IPC):
**G06F 9/50** $^{(2006.01)}$

(52) Cooperative Patent Classification (CPC):
**G06F 9/5066;** G06F 2209/5017

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Q.ant GmbH
70565 Stuttgart (DE)**

(72) Inventor: **Najafgholi, Amir
53115 Bonn (DE)**

(74) Representative: **Trumpf Patentabteilung
Trumpf SE + Co. KG
TH550 Patente und Lizenzen
Johann-Maus-Straße 2
71254 Ditzingen (DE)**

(54) **METHOD FOR COMPUTING A PARTITION FUNCTION OF A SYMMETRIC MATRIX ON AT LEAST ONE PROCESSING UNIT**

(57) The invention relates to a method for computing a partition function, in particular a hafnian, of a symmetric matrix on at least one processing unit with some features of claim 1.

Fig.1

**Description**

The invention relates to a method for computing a partition function, in particular a hafnian, of a symmetric matrix on at least one processing unit with some features of claim 1.

The computation of the exact value of a partition function, in particular the hafnian, of a complex or real symmetric matrix A with dimensions n x n is very difficult. It is expensive to calculate because even its approximation is a #P hard problem, which means it takes exponential computational resources of time and energy.

The task to be solved is to provide a method for computing a partition function of a symmetric matrix on at least one processing unit while overcoming the above disadvantages.

The above task is solved by a method for computing a partition function, in particular the hafnian, of a symmetric matrix on at least one processing unit with the features claim 1.

The symmetric matrix can be complex or real. The symmetric matrix can be an adjacency matrix.

The method comprises the steps of:
Registering the matrix inside a shared memory of the processing unit.

Dividing a task for computing the partition function, in particular the hafnian, in partial tasks.

Transferring each partial task to a core and/or thread of the processing unit.

Calculating a partial result from each partial task by the respective core and/or thread.

Storing the partial results in the shared memory of the processing unit.

Compiling the partial results to a total result.

With this, the computation of the partition function, in particular the hafnian, of a symmetric matrix can be speeded up. It is possible to compute the exact value of any partition function or a hafnian. If the constraints are omitted, the computing of the approximated versions of the partition functions, in particular the hafnians, is possible, which then will be even faster. The method is applicable to all members of the class of partition functions such as hafnians, permanents, etc., since they can all be reduced in the same structure/calculation scheme.

According to an embodiment of the method, the method can comprise the step of:
Reading out and/or outputting the total result from the shared memory, in particular via a central processing unit (CPU). Then the total result can be displayed on an user interface.

According to an embodiment of the method, the processing unit can be a graphics processing unit (GPU) or a tensor processing unit (TPU).

According to an embodiment of the method, the shared memory can be configured for a group thread. In particular each core and/or thread can read its own task from the group thread. It is conceivable that the shared memory can be a global memory. In this way, the first reading of the tasks can be done from the global memory, then the tasks can be stored in the shared memory of groups of the threads, which can be much faster and the other threads within the group can have access to it.

A GPU allows having more of these resources in much smaller footprints and higher bandwidth and less energy. It is possible to calculate the hafnian on a small gaming GPU that is equivalent to about thousands of CPUs or a cluster of CPUs. In addition, the method according to the above explanations is so efficient that it is possible to use dedicated GPU hardware or even clusters of GPUs, and there can be no CPU clusters that can compete with that.

A CPU can run a great variety of logic operators (e.g., and, or, not, etc.) and arithmetic (+, -, *, /, etc.) computations. The low-level computer languages exploit these components/functions of CPUs. If there is a problem that has enormous complexity and can be naturally parallelized to simultaneously smaller tasks, it is possible to distribute the problem over multiple CPUs or the cores of the CPUs, or both of them together. However, there are some very complex problems which need to be divided into smaller tasks and the number of those tasks are much larger than the total available CPUs (or their total number of cores).

Usually, the number of CPUs is limited, they are expensive, hard to maintain, hard to keep cool and consume a lot of energy. On the other hand, some problems can be divided into many smaller tasks that are very easy to compute and they do not need the complex structure of a CPU.

For such problems, one can also use a different structure. GPUs on the other hand have a high number of cores/threads in a much smaller footprint, with much lower energy consumption and maintenance, and the price per core for both buying and maintenance is cheaper. However with the price of less flexibility, and lower number computation power, and harder to use. Each GPU chip has around a few thousand computational unit cores and/or threads, compared to dozens of computational unit cores of the CPU chip (factor 1000 more for GPU), while all of the GPU cores and/or threads have access to the shared global memory.

Also blocks (e.g., 20 x 20) of GPU cores and/or threads have their own sub shared memory, and each GPU core and/or thread also has its own memory called "register". These memories have a hierarchy in terms of faster access, from register to block memory to global shared memory. A method which uses the GPU cores and/or threads in an optimal way needs to pay attention to this hierarchy. GPUs architecture usually can be abstracted as a 3-dimensional architecture, wherein multiple layers k together form a grid. All grids together have one shared global memory.

The computation of a partition function, in particular a hafnian, can comprise the following steps:
First, a matrix A with dimensions (n x n) can be registered in the global memory of the GPU. The size of A can be extremely small compared to the global memory of the GPU. The total steps of calculation to get the hafnian of A can be in the order of O(n^3*2^(n/2)). Here 2^(n/2) cores and/or threads of the GPU, in particular with a certain structure, need to be assigned to work to calculate the final value. If the number of the total steps is expected to exceed the number of available cores and/or threads in the GPU, then an automation mechanism can distribute the steps over batches of steps.

Next, the cores and/or the threads can get access to the GPU's global memory, in particular this access happens only one time in the whole method. This is because the number of read-in and read-outs from the global memory should be reduced as much as possible, since it can be a bottleneck for the computation.

In this stage, each core and/or thread with its unique id can read a portion of the matrix A, as B_id. Later, each core and/or thread can generate its own task from B_id. The binary mask is a process in which each core and/or thread can only read columns and rows of A where there is a "1" in its binary representation of its id. Each core and/or thread can have a unique B_id because of this binary masking.

Each B_id can contain a collection of walks on edges of the matrix A, because it is possible to represent A as a graph, and B_id is a subgraph of A. Matrix A can be represented as a graph including nodes and edges. The subgraph B_id can be represented as a subgraph of it with edges and nodes. For the subgraph B_id there can be a plurality of different walks from a start to an end node.

In particular, each core and/or thread needs to create its own task from its B_id. Indeed, this task is computation of a generating function p(B_id) from the below equation (Eq).

$$p(\lambda, B_{id}) = \sum_{j=1}^{n/2} \frac{1}{j!} \left( \sum_{k=1}^{n/2} \frac{tr(B_{id}^k)\lambda^k}{2k} \right)^j$$

With the above equation the number of ways to combine several walks to a total of m, where m=n/2, visited edges, where m is the number of nodes of the subgraph B_id, can be counted.

This computation generally can be executed with the help of some other free cores and/or threads in the same block of cores and/or threads (see below).

The final value of the generative function p(B_id) for each core and/or thread can be called haf_id. The final value of the hafnian can be the sum of all haf_ids. This mapping can be so efficient that all the values of haf_ids can be ready relatively at the same time. It gets even more efficient by having a smart scheduling helper, where subgraphs with the same size seats next to each other. After all haf_ids are ready, the built-in GPU's sum process get the value of the total hafnian from haf_ids.

After the summing process, the resulting value can be returned back to the CPU, and the hafnian can be used further.

According to an embodiment of the method, the step of:

Dividing the task for computing the partition function, in particular the hafnian, in partial tasks, can be executed by each respective core and/or thread of the processing unit.

According to an embodiment of the method, the method can comprise the steps of:

Reading the task from the shared memory and dividing the task into a block of partial tasks via a leader core and/or thread. In other words, each core and/or thread can lead by its own and read its tasks from the shared memory. If the number of tasks is much higher than the available resources, then a few leading cores and/or threads superficially group the tasks and then other cores and/or threads including the leader themselves read their own tasks from the shared memory.

Storing the block of partial tasks in a block memory of a block of cores and/or threads via the leader core and/or thread. In other words, each core and/or thread can lead by its own and store its tasks to a block of shared memory. If the number of tasks is much higher than the available resources, then a few leading cores and/or threads superficially group the tasks together and then other cores and/or threads including the leader themselves store their own tasks to a block of shared memory assigned by their leader.

Transferring each partial task to a core and/or thread of the block of cores and/or threads.

Calculating a partial result from each partial task by the respective core and/or thread of the block of cores and/or threads.

Storing the partial results in the block memory or the shared memory of the processing unit.

Compiling the partial results to a total result.

According to an embodiment of the method, the method can comprise the step of:

Pre-calculating at least one coefficient of the task or at least one partial task.

Storing at least one pre-calculated coefficient in the shared memory and/or the block memory.

Pre-calculation of factors can reduce the number of terms or partial tasks to be computed on one core and/or thread.

A computer-readable storage medium is proposed comprising commands or instructions which, when executed by a computer, cause the computer to execute the method according to the above explanations. With respect to the advantages that can be achieved thereby, reference is made to the explanations concerning the method in this respect. For further embodiment of the storage medium, the measures described in connection with the method and/or those still explained below may serve.

A computer program is proposed comprising commands or instructions that, when the computer program is executed by a computer, cause the computer to execute the method according to the above explanations. With respect to the advantages that can be achieved thereby, reference is made to the explanations concerning the method in this respect. For further embodiment of the computer program, the measures described in connection with the method and/or those still explained below may serve.

A data carrier signal is proposed which characterizes and/or transmits the computer program according to the above explanations. The data carrier signal may be receivable, for example, via an optional data interface of a computer. With regard to the advantages achievable thereby, reference is made to the explanations concerning the computer program in this respect. The measures described in connection with the computer program and/or those explained below can be used for the further design of the data carrier signal.

A use of the method according to the above explanations and/or the computer-readable storage medium according to the above explanations and/or the computer program according to the above explanations and/or the data carrier signal according to the above explanations is proposed for simulating a quantum computer with a classical computer.

It is possible to calculate the value of any sort of partition function of any system where the partition function is derived from a Quadratically Signed Weight Enumerator.

With this, it is possible to simulate a photonics quantum computing device, in particular a so-called Gaussian Boson Sampler (GBS). For that, the main quantity that needs to be calculated is the hafnian of a configured GBS device (including its specific inputs).

With this simulation, it is possible to certify the output of a GBS hardware up to some number of modes and recalibrate it in real time. In order to develop algorithms for the GBS hardware there is a need for being able to quickly calculate the exact value of many hafnians. This computation is extremely demanding, and it needs an exponential number of resources in terms of the input number of n.

The computation of a partition function, in particular a hafnian, can comprise the following steps:
Each partial task can be formulated in a way that it can automatically calibrate itself to use different elements inside a GPU like registers, IDs (thread id, block id), dynamic shared memory, static shared memory and/or global memory.

"Calibrate" means here that with the method walks with similar lengths can be grouped with each other and based on these groups the memory, sizes of the blocks, sizes of the grids, etc. can be allocated. The core and/or thread that reads B_id from the global memory can be a leader core and/or thread of a block of other cores and/or threads.

Each core and/or thread can save B_id in the shared memory of its block (block memory), so other cores and/or threads can have access to it, the block constraints are assigned superficially via few leading threads. This shared block memory is much faster than the global memory, but also very small, so its usage should be managed. For the management, the steps of the method can be designed in a way that the computation usage of shared (block) memory never exceeds the amount of each block's block memory.

One particular step can be to put certain values that never need to be changed in one calculation inside the registers of each core and/or thread. These registers are even faster than shared (block) memory but also smaller than them. Therefore, by managing the usage of memory in a hierarchical manner it is possible to exploit the power of each core and/or thread as much as possible.

When for any general problem tasks are going to be executed in parallel, there can be a prestep, and that is distribution of the tasks to the many computing units. For the case of hafnian, which is a #P hard problem and that means this will be the most difficult problem to calculate exactly, the number of parallel tasks increases exponentially, so by that the distribution of the tasks will become by itself a bottleneck (in terms of needed computation power/cycles).

The individual GPU computing cores and/or threads can generate their own task based on their hard-coded IDs and a small set of global parameters that all units have access to simultaneously. In this way, the issue of distributing a large number of tasks can be fixed and each task can automatically be generated inside each block of cores and/or threads.

The above function (Eq) counts in the monomial of $\lambda^{\wedge}(n/2)$. This means that it takes into account all the number of ways to combine several walks to a total of n visited edges. However, it may count some edges multiple times. On the other hand, when the generating function wants to run over all the possible ways it takes a lot of memory from the GPUs, which is a bottleneck for GPU calculations.

So, running this equation (Eq) in this form may not be feasible (for large problems). It is possible to expand the monomial over the two sums and then apply some constraints. In this way, it is possible to calculate the only possible number of coefficients and save them into an external file. This file will always be the same for a matrix with dimension (n x n).

The values can be read by CPU before the running of the method and then write them into the global memory of the GPU. Hence, there is no need to calculate the coefficients anymore, and so the GPU can only calculate the matrix parts.

Further features, details and advantages of the invention are apparent from the wording of the claims and from the following description of embodiments based on the drawings. Showing:

Fig. 1 a flow diagram of a method for computing a partition function of a symmetric matrix on at least one processing unit and

Fig. 2 schematically a block diagram of a computer-readable storage medium, a computer program and a data carrier signal.

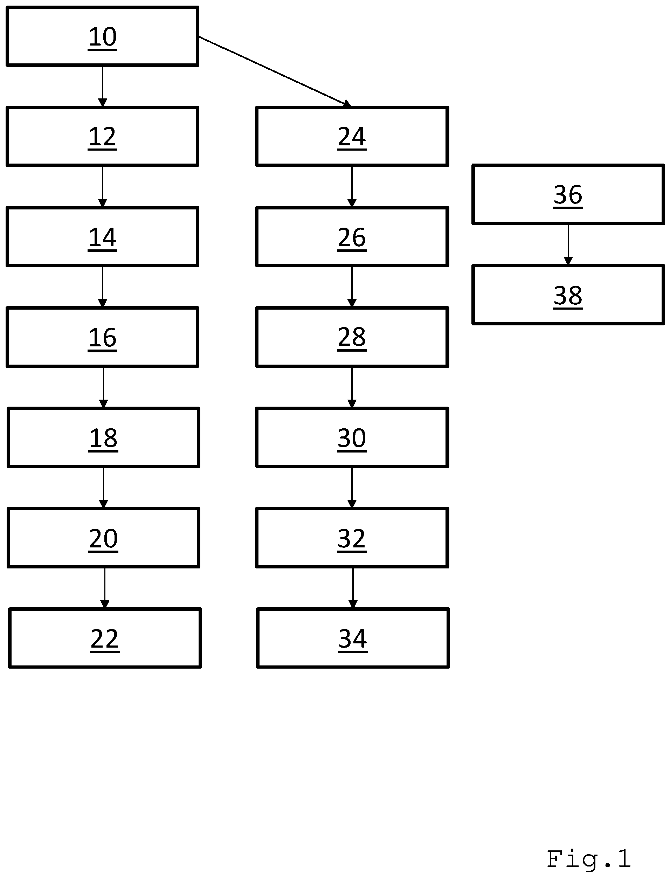

Figure 1 shows a flow diagram of a method for computing a partition function of a symmetric matrix on at least one processing unit.

The method comprises the steps of:
Registering the matrix inside a shared memory of the processing unit 10. The shared memory can be a global memory.

Dividing a task for computing the partition function, in particular the hafnian, in partial tasks 12. This step can be executed by each respective core and/or thread of the processing unit.

Transferring each partial task to a core and/or thread of the processing unit 14. The processing unit can be a graphics processing unit or a tensor processing unit.

Calculating a partial result from each partial task by the respective core and/or thread 16.

Storing the partial results in the shared memory of the processing unit 18.

Compiling the partial results to a total result 20.

The method can comprise the step of:
Reading out and/or outputting the total result from the shared memory, in particular via a central processing unit 22.

The method can comprise the steps of:
Reading the task from the shared memory and dividing the task into a block of partial tasks via a leader core and/or thread 24.

Storing the block of partial tasks in a block memory of a block of threads and/or cores via the leader core and/or thread 26.

Transferring each partial task to a core and/or thread of the block of cores and/or threads (28).

Calculating a partial result from each partial task by the respective core and/or thread of the block of cores and/or threads 30.

Storing the partial results in the block memory or the shared memory of the processing unit 32.

Compiling the partial results to a total result 34.

The method can comprise the steps of:
Pre-calculating at least one coefficient of the task or at least one partial task 36.

Storing at least one pre-calculated coefficient in the shared memory and/or the block memory 38.

The method according to any one of the above explanations can be used for simulating a quantum computer with a classical computer.

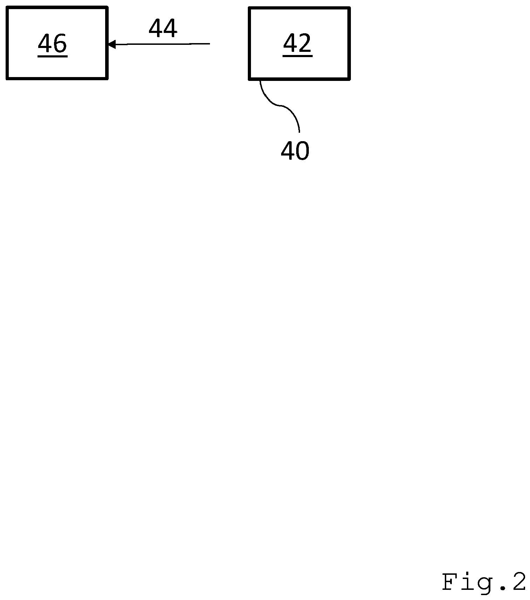

Figure 2 shows schematically a block diagram of a computer-readable storage medium 40 that can comprise commands 42 which, when executed by a computer, cause the computer to perform the method according to any one of the above explanations.

The computer-readable storage medium 40 according to any of the above explanations can be used for simulating a quantum computer with a classical computer.

Figure 2 shows schematically a computer program 42 that can comprise commands that, when the computer program 42 is executed by a computer, cause the computer to execute the method according to any one of the above explanations.

The computer program 42 according to any of the above explanations can be used for simulating a quantum computer with a classical computer.

Figure 2 shows schematically a data carrier signal 44 transmitting and/or characterizing the computer program 42 according to the above explanation. The data carrier signal 44 may be receivable, for example, via an optional data interface 46 of a computer.

The data carrier signal 44 according to any of the above explanations can be used for simulating a quantum computer with a classical computer.

**Claims**

1. Method for computing a partition function, in particular a hafnian, of a symmetric matrix on at least one processing unit comprising the steps of:

   - registering the matrix inside a shared memory of the processing unit (10),
   - dividing a task for computing the partition function, in particular the hafnian, in partial tasks (12),
   - transferring each partial task to a core and/or thread of the processing unit (14),
   - calculating a partial result from each partial task by the respective core and/or thread (16),
   - storing the partial results in the shared memory of the processing unit (18),
   - compiling the partial results to a total result (20) .

2. Method according to claim 1, **characterized in that** the method comprises the step of:

   - reading out and/or outputting the total result from the shared memory, in particular via a central processing unit (22).

3. Method according to any one of the preceding claims, **characterized in that** the processing unit is a graphics processing unit or a tensor processing unit.

4. Method according to any one of the preceding claims, **characterized in that** the shared memory is configured for a group thread, in particular wherein each core and/or thread reads its own task from the group thread.

5. Method according to any one of the preceding claims, **characterized in that** the step of:

   - dividing the task for computing the partition function, in particular the hafnian, in partial tasks (12),

   is executed by each respective core and/or thread of the processing unit.

6. Method according to any one or the preceding claims, **characterized in that** the method comprises the steps of:

   - reading the task from the shared memory and dividing the task into a block of partial tasks via a leader core and/or thread (24),
   - storing the block of partial tasks in a block memory of a block of cores and/or threads via the leader core and/or thread (26),
   - transferring each partial task to a core and/or thread of the block of cores and/or threads (28),
   - calculating a partial result from each partial task by the respective core and/or thread of the block of cores and/or threads (30),
   - storing the partial results in the block memory or the shared memory of the processing unit (32),
   - compiling the partial results to a total result (34).

7. Method according to any one of the preceding claims, **characterized in that** the method comprises the steps of:

   - pre-calculating at least one coefficient of the task or at least one partial task (36),
   - storing at least one pre-calculated coefficient in the shared memory and/or the block memory (38).

8. A computer-readable storage medium (40) comprising commands (42) which, when executed by a computer, cause the computer to perform the method according to any one of the claims 1 to 7.

9. A computer program (42) comprising commands which, when the computer program (42) is executed by a computer, cause the computer to execute the method according to any one of the claims 1 to 7.

10. Data carrier signal (44) transmitting and/or characterizing the computer program (42) according to claim 9.

11. Using of the method according to any one of the claims 1 to 7 and/or the computer-readable storage medium (40) according to claim 8 and/or the computer program (42) according to claim 9 and/or the data carrier signal (44) according to claim 10 for simulating a quantum computer with a classical computer.

Fig.1

46

44

42

40

Fig.2

Europäisches
Patentamt

European
Patent Office

Office européen
des brevets

# EUROPEAN SEARCH REPORT

Application Number

EP 23 20 2230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BJÖRKLUND ANDREAS ANDREAS BJORKLUND@CS LTH SE ET AL: "A Faster Hafnian Formula for Complex Matrices and Its Benchmarking on a Supercomputer", ACM JOURNAL OF EXPERIMENTAL ALGORITHMICS, ASSOCIATION OF COMPUTING MACHINERY, NEW YORK, NY, US, vol. 24, 11 June 2019 (2019-06-11), pages 1-17, XP058669167, ISSN: 1084-6654, DOI: 10.1145/3325111 * abstract * * pages 3,9,10 * | 1-11 | INV. G06F9/50 |
| A | CHANGHUN OH ET AL: "Tensor network algorithm for simulating experimental Gaussian boson sampling", ARXIV.ORG, CORNELL UNIVERSITY LIBRARY, 201 OLIN LIBRARY CORNELL UNIVERSITY ITHACA, NY 14853, 6 June 2023 (2023-06-06), XP091532136, * the whole document * | 1-11 | |
| A | US 8 527 973 B2 (LITTLE JOHN N [US]; HICKLIN JOSEPH F [US] ET AL.) 3 September 2013 (2013-09-03) * the whole document * | 1-11 | TECHNICAL FIELDS SEARCHED (IPC) G06F |
| A | WO 2022/118236 A1 (JET BLOCKCHAIN INC [CA]) 9 June 2022 (2022-06-09) * the whole document * | 1-11 | |
| A | US 2020/183756 A1 (SUZUKI JUN [JP] ET AL) 11 June 2020 (2020-06-11) * the whole document * | 1-11 | |

The present search report has been drawn up for all claims

| Place of search | Date of completion of the search | Examiner |
|---|---|---|
| The Hague | 29 February 2024 | Manfrin, Max |

EPO FORM 1503 03.82 (P04C01)

## ANNEX TO THE EUROPEAN SEARCH REPORT
## ON EUROPEAN PATENT APPLICATION NO.

EP 23 20 2230

This annex lists the patent family members relating to the patent documents cited in  the above-mentioned European search report.
The members are as contained in the European Patent Office EDP file on
The European Patent Office is in no way liable for these particulars which are merely given for the purpose of information.

29-02-2024

| Patent document cited in search report | | Publication date | Patent family member(s) | | Publication date |
|---|---|---|---|---|---|
| US 8527973 | B2 | 03-09-2013 | EP | 2147374 A1 | 27-01-2010 |
| | | | EP | 2562645 A2 | 27-02-2013 |
| | | | US | 2008201721 A1 | 21-08-2008 |
| | | | US | 2012011347 A1 | 12-01-2012 |
| | | | WO | 2008144187 A1 | 27-11-2008 |
| WO 2022118236 | A1 | 09-06-2022 | NONE | | |
| US 2020183756 | A1 | 11-06-2020 | JP | 7014173 B2 | 01-02-2022 |
| | | | JP | WO2018074444 A1 | 29-08-2019 |
| | | | US | 2020183756 A1 | 11-06-2020 |
| | | | WO | 2018074444 A1 | 26-04-2018 |

EPO FORM P0459

For more details about this annex : see Official Journal of the European Patent Office, No. 12/82